# EUROPÄISCHE PATENTSCHRIFT

(11) **EP 1 693 095 B1**
(45) Veröffentlichungstag und Bekanntmachung des Hinweises auf die Patenterteilung: **28.01.2009**
(21) Anmeldenummer: 05003585.6
(22) Anmeldetag: 18.02.2005
(51) Int. Cl.: B01D 29/33, B01D 39/20, C02F 1/28

(54) **Wasserfiltersystem für den Einsatz in autarken Versorgungssystemen**
Water filtration system for use in self-sufficient supply system
Système de filtration d'eau pour systèmes d'alimentation autosuffisants

(43) Veröffentlichungstag der Anmeldung: 23.08.2006
(73) Patentinhaber: Truma Gerätetechnik GmbH & Co. KG, 85640 Putzbrunn (DE)
(72) Erfinder: Fechner, Michael, 85625 Glonn (DE); Schorisch, Ralf, 85604 Zorneding (DE)
(74) Vertreter: Müller - Hoffmann & Partner

(56) Entgegenhaltungen:
- EP-A- 0 792 676
- US-A- 5 106 501
- US-A- 5 510 031
- US-A- 5 989 424
- US-A1- 2003 070 968

## Beschreibung

Die Erfindung betrifft ein Wasserfiltersystem gemäß dem Oberbegriff von Anspruch 1.

Es ist ein Wasserfiltersystem für den Einsatz in autarken Versorgungssystemen bekannt, mit
- einem becherförmigen Gehäuse mit einem zumindest an seinen Enden jeweils annähernd rotationssymmetrischen Mantel, in welchen ein Zulauf mündet, einem Boden mit einem zentrisch angeordneten Ablauf und einer offenen, mit einer Gehäusekappe dicht verschließbaren Oberseite und mit
- einem koaxial in dem Gehäuse zwischen dem Boden und der Gehäusekappe angeordneten Filtereinsatz.

Autarke Versorgungssysteme für die Anwendung der Erfindung sind in erster Linie für den Einsatz in Caravans und Reisemobilen, aber auch in sonstigen abgelegenen Wohnstellen, die keinen Anschluss an eine zentrale Wasserversorgung mit entsprechenden Filteranlagen besitzen, bestimmt.

Bei der Versorgung von beweglichen oder abgelegenen Wohnstellen mit Frischwasser aus örtlichen Wasserbehältern oder natürlichen Quellen ist es im Vergleich zu Haushalten mit zentraler Wasserversorgung sehr wichtig, das Wasser von eventuellen Verunreinigungen zu befreien. Hierzu werden in der Regel Aktivkohlefilter verwendet, da die Aktivkohle mit ihrer sehr großen aktiven Oberfläche beispielsweise Stoffe, die schlechten Geschmack oder Geruch verursachen, adsorbieren kann.

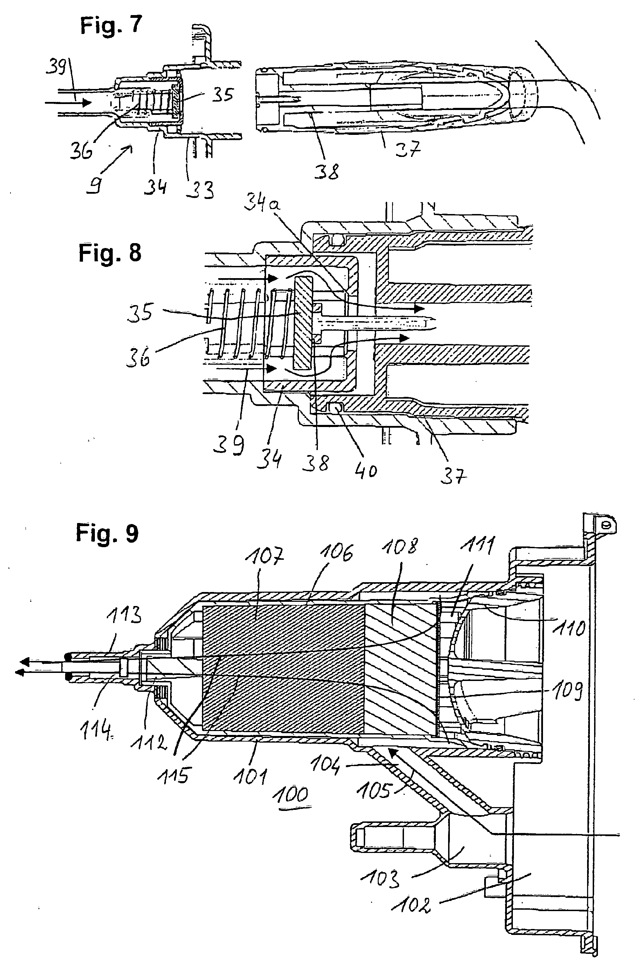

Ein bisher übliches Wasserfiltersystem 100 für Wasserinstallationen in mobilen Wohneinheiten ist in Fig. 9 im Schnitt dargestellt. Es besitzt ein Gehäuse 101, das mit einem Einbaurahmen 102 für den Einbau in die Außenwand eines Reisemobils verbunden ist. Über eine Steckaufnahme 103 für einen Schlauchanschluss und ein Verbindungsrohr 104 erfolgt der Wasserzulauf, dargestellt durch einen Pfeil 105, in das Gehäuse 101. In dem Gehäuse befindet sich eine Filterpatrone mit einem becherförmigen Innengehäuse 106, welches eine Aktivkohleschüttung 107 in Form von Granulat und einen vorgeschalteten Schwammfilter 108 enthält. Ein den Schwammfilter 108 bedeckendes Abschlusssieb 109 begrenzt zusammen mit einem das Innengehäuse 106 an einem stirnseitigen Ende dicht abschließenden Schraubverschluss 110 eine Zulaufkammer 111, während das entgegengesetzte Ende des Innengehäuses 106 mit einer Ablauföffnung 112 in ein Ablaufrohr 113 des Gehäuses 101 mündet, in welchem ein Rückschlagventil 114 angeordnet ist. Eine zusätzliche, in Fig. 9 nicht dargestellte Gehäusekappe verschließt das Gehäuse 101 im Bereich des Einbaurahmens nach außen. Das Wasser strömt also bei dem bekannten System von dem Zulaufrohr 104 kommend über die stirnseitige Zulaufkammer 111 in die Filterpatrone, wobei das Aktivkohlegranulat 107 in Richtung der Pfeile 115 in axialer Richtung durchströmt wird. Der Strömungsquerschnitt ist also auf die Größe der Stirnfläche begrenzt, was einen relativ hohen Druckverlust mit sich bringt.

Wichtig für die Filtration ist ferner, dass das zu filternde Medium (Wasser) beim Durchströmen des Filters eine möglichst große aktive Kohlefläche kontaktiert. Dies ist bei einem Granulatfilter nicht optimal gegeben, weil z.B. Wasser das Filter auch zwischen den Granulatkörnern passieren kann und somit zum Teil nicht mit der aktiven Kohlefläche in Berührung kommt. Durch diese so genannte Bypassbildung zwischen den Granulatkörnern sind sowohl die Partikelfiltration als auch die Adsorption von Stoffen gering, die schlechten Geruch und Geschmack verursachen (z.B. Chlor). Bei Erstbenutzung des Filters wird außerdem eine große Menge von feinen Kohlepartikeln ausgewaschen, die dann die Installation verschmutzt, während sich nach längerem Betrieb durch Setzen der Aktivkohleschüttung die Bypassbildung verstärkt.

Für die Hausinstallation sind auch Systeme bekannt, bei denen hohlzylinderförmige Filterpatronen in Radialrichtung vom Wasser durchsetzt werden (DE 298 20 122 U1). Diese bekannten Systeme sind jedoch für den Einbau in die Außenwand eines Reisemobils zu unhandlich; sie erfordern aufwendige Dichtungskonzepte mit einer großen Teilevielfalt, und durch eine hohe Anzahl von Dichtflächen mit jeweils einzelnen Dichtringen erhöht sich das Risiko einer Leckage.

Ziel der vorliegenden Erfindung ist es, ein Filtersystem anzugeben, das speziell für die Verwendung in mobilen Versorgungssystemen eine verbesserte Filterwirkung gegenüber Granulatfiltern ohne zu starken Druckverlust ermöglicht. Außerdem soll der Aufbau eine vereinfachte Handhabung im Gebrauch und beim Filterwechsel, insbesondere auch eine verbesserte und vereinfachte Abdichtung aller Teile ermöglichen.

Erfindungsgemäß wird dieses Ziel gemäß Anspruch 1 bei einem Filtersystem der eingangs genannten Art dadurch erreicht, dass der Filtereinsatz durch einen hohlzylindrischen Formkörper aus Aktivkohle gebildet ist, der mit seinen Stirnenden zwischen dem Boden und der Kappe dicht eingeklemmt ist, wobei zwischen dem Mantel des Gehäuses und der Manteloberfläche des Formkörpers eine ringförmige Zuströmkammer gebildet ist und der Innenhohlraum des Formkörpers lediglich zum Ablauf hin offen ist.

Bei dem Formkörper kann es sich z.B. um einen Pressformkörper bzw. Sinter-Formkörper handeln. Der Formkörper kann aber auch z.B. durch Extrudieren oder Schleudern hergestellt werden.

Bei dem erfindungsgemäßen System wird also anstelle einer Patrone mit Innengehäuse zur Aufnahme eines Granulats ein hohlzylindrischer Formkörper verwendet, der in dem Filtergehäuse unmittelbar zwischen dem Gehäuseboden und der Gehäusekappe dicht eingeklemmt wird. Dieser Formkörper bringt gegenüber Filtern mit Aktivkohleschüttung sowohl eine bessere Partikelfiltration als auch eine bessere Schadstoffreduktion. Das Wasser wird über die ringförmige Zuströmkammer radial durch den Mantel des hohlzylindrischen Aktivkohlekörpers gepresst, so dass der größere Querschnitt der Mantelfläche im Vergleich zu der Stirnfläche bei axialer Strömung den an sich bei einem Formkörper größeren Druckverlust ausgleicht. Durch Verwendung eines Aktivkohlekörpers mit grober Porigkeit kann der Druckverlust weiter verringert werden.

Wie erwähnt, ist eine Abdichtung lediglich zwischen dem Formkörper und dem Gehäuseboden einerseits und der Gehäusekappe andererseits notwendig - abgesehen von der Dichtung zwischen der Schraubkappe und dem offenen Gehäuserand -, so dass die Zahl der Dichtflächen gegenüber herkömmlichen Filterpatronen verringert ist.

Besonders vorteilhaft ist dabei die Verwendung eines Bodendichtrings aus elastisch deformierbarem Material mit profiliertem Querschnitt zwischen dem Formkörper und dem Boden. Dieser besitzt vorzugsweise auf der dem Boden zugewandten Seite einen ringförmigen Dichtungssteg mit einer umlaufenden Anlaufschräge, der mit einer entsprechenden Anlaufschräge eines an dem Boden angeformten ringförmigen Bodensteges unter Deformierung des Dichtungssteges und/oder des Bodensteges ineinander greift.

Weiterhin kann der Bodendichtring an seiner Oberseite einen umlaufenden Doppelringsteg aufweisen, der das bodenseitige Ende des Formkörpers umfasst; damit kann der Bodendichtring mit dem Formkörper gemeinsam eingeführt und herausgenommen werden.

Zwischen dem kappenseitigen Stirnende des Filtereinsatzes und der Gehäusekappe ist zweckmäßigerweise eine Dichtungskappe angeordnet, die mit einem innenseitig umlaufenden Ringsteg das obere Stirnende des Formkörpers umgreift und mit einem außenseitig angeformten Druckringsteg an der Gehäusekappe abgestützt ist. An ihrer Außenseite ist vorzugsweise ein Griffsteg oder Drehknebel angeformt, mit dem sie samt dem Formkörper und dem Bodendichtring zum Filterwechsel herausgenommen werden kann.

Im Ablauf ist ein in den Innenhohlraum des Filtereinsatzes ragender, mit in Längsrichtung verlaufenden Ablaufschlitzen versehener Ablaufdorn angeordnet, der sich passgenau durch die Innenöffnung des Bodendichtrings erstreckt und so für eine Führung und Ausrichtung des Bodendichtrings und des Filtereinsatzes beim Einsetzen sorgt.

In einer vorteilhaften Weiterbildung ist die offene Stirnseite des Gehäuses mit einem Rand umschlossen, an welchem ein die Gehäusekappe konzentrisch umschließender, relativ zu einer auf dem Rand angeordneten Markierung verdrehbarer Datumsring gelagert ist, wobei auf dem Datumsring umlaufend ein zyklischer Zeitablauf, vorzugsweise ein Jahreszyklus, verzeichnet ist. Mit der Markierung kann als Erinnerung an einen fälligen Filterwechsel der Beginn und/oder das Ende der Lebensdauer eines Filtereinsatzes als Teilintervall des auf dem Datumsring aufgezeichneten Zeitzyklus durch Drehen des Datumsrings eingestellt werden. Natürlich wäre es auch möglich, den Zeitzyklus auf dem Gehäuserand und die Markierung auf dem Datumsring vorzusehen.

In einer vorteilhaften Ausgestaltung ist das Gehäuse in an sich bekannter Weise im Bereich seiner offenen Stirnseite mit einem Einbaurahmen zum Einsetzen in die Außenwand einer mobilen Wohneinheit derart versehen, dass die Gehäusekappe neben einem Steckanschluss für eine Pumpleitung von außerhalb der Wand zugänglich ist, während der Steckanschluss auf der Innenseite der Wand mit der Zuleitung zum Gehäuse verbunden ist. Angesichts der beengten Platzverhältnisse in einem Reisemobil kann so beispielsweise der Filtereinsatz bequem von der Außenseite des Wagens gewechselt werden.

In einer weiteren vorteilhaften Ausgestaltung besitzt der Einbaurahmen eine zusätzliche Entnahmeöffnung mit einer Steckkupplung für eine Schlauchleitung zu einem externen Verbraucher, beispielsweise zu einer Außendusche, die mit dem Ablauf des Gehäuses auf der Innenseite des Einbaurahmens verbunden ist und deren Steckkupplung im Ruhezustand mittels eines Druckventils verschlossen ist. Das Druckventil weist vorzugsweise eine Dichtungsplatte auf, die mittels Federkraft von der Innenseite gegen den Rand der Steckkupplung gedrückt wird und die beim Anschluss eines Schlauchsteckers mittels eines an diesem vorgesehenen Stößels geöffnet wird.

Die Erfindung wird nachfolgend an einem Ausführungsbeispiel anhand der Zeichnung näher erläutert. Es zeigen
**Fig. 1** eine grundsätzliche Darstellung einer Wasserinstallation an einem Reisemobil mit einem erfindungsgemäßen Wasserfiltersystem,
**Fig. 2** eine vergrößerte Darstellung des Wasserfiltersystems von Fig. 1 mit einem zum Wechsel herausgenommenen Filtereinsatz,
**Fig. 3** eine Schnittdarstellung des erfindungsgemäßen Filtergehäuses,
**Fig. 4A** und **4B** eine Detailvergrößerung IV aus Fig. 3 zur Darstellung der Abdichtung am Gehäuseboden in zwei Phasen des Zusammenbaus,
**Fig. 5** eine vergrößerte Darstellung eines Einbaurahmens mit Datumsring in Vorderansicht,
**Fig. 6** eine perspektivische Darstellung des Einbaurahmens von Fig. 5 mit herausgenommenem Datumsring,
**Fig. 7** eine Schnittdarstellung einer Steckkupplung aus Fig. 5 mit einem Schlauchstecker,
**Fig. 8** eine vergrößerte Darstellung der Steckkupplung von Fig. 7 mit eingestecktem Schlauchstecker und
**Fig. 9** eine Schnittdarstellung eines Wasserfiltersystems nach dem Stand der Technik.

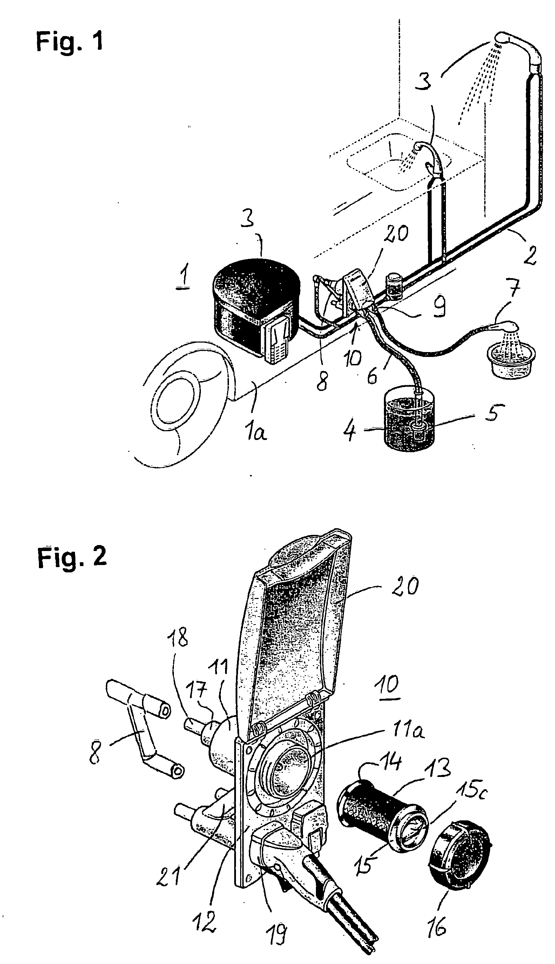

Das in Fig. 1 gezeigte Wasserversorgungssystem ist in einem nur andeutungsweise gezeigten Reisemobil 1 installiert. Es umfasst ein internes Leitungssystem 2 mit mehreren internen Verbrauchern 3. Es wird gespeist aus einem externen Behälter 4 mittels einer Tauchpumpe 5 und über eine Schlauchleitung 6, die im Bereich der Außenwand 1a des Reisemobils über ein erfindungsgemäßes Filtersystem 10 mit dem Leitungssystem 2 verbunden ist. Zusätzlich ist in der Außenwand 1a eine Entnahmeöffnung mit Anschluss an das Leitungssystem 2 vorgesehen, mittels welcher ein externer Verbraucher 7, beispielsweise eine Außendusche, über ein internes Verzweigungsstück 8 und eine Steckkupplung 9 mit gefiltertem Wasser versorgt wird.

Den äußeren Aufbau des Filtersystems 10 zeigt Fig. 2. Ein becherförmiges Gehäuse 11 ist vorzugsweise einstückig mit einem Einbaurahmen 12 derart verbunden, dass eine offene Stirnseite 11 a durch dem Einbaurahmen 12 nach außen zeigt, so dass ein hohlzylindrischer Filtereinsatz 13 mit einem Dichtungsring 14 und einer Dichtungskappe 15 von außen in Axialrichtung einsetzbar ist. Nach dem Einsetzen wird das Gehäuse 11 mit einer auf den Rand der Stirnseite 11 a aufschraubbaren Gehäusekappe 16 verschlossen. Die auf der Innenseite des Einbaurahmens 12 liegende Bodenseite des Gehäuses 11 bildet einen Wasserablauf 17 mit einem Rohransatz 18, von dem über das Verzweigungsstück 8 das interne Leitungssystem 2 und die externe Steckkupplung 9 versorgt werden.

Im Einbaurahmen 12 ist weiterhin ein Kombinations-Steckanschluss 19 für die Schlauchleitung 6 in Verbindung mit einem nicht weiter dargestellten Elektroanschluss für die Tauchpumpe 5 vorgesehen. Damit wird die Schlauchleitung 6 mit einem internen Zulauf 21 zum Filter-Gehäuse 11 verbunden. Ein Klappdeckel 20 dient schließlich zur Abdeckung des Einbaurahmens 12 mit dem Filtergehäuse 11 und den verschiedenen Steckanschlüssen.

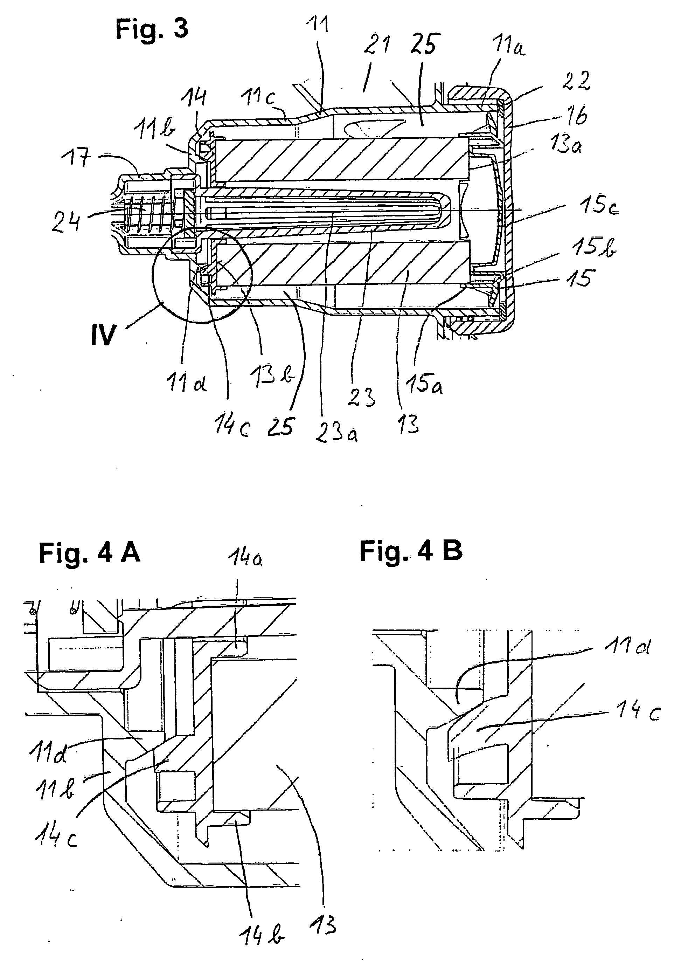

Der innere Aufbau des erfindungsgemäßen Filtersystems ist in der Schnittdarstellung von Fig. 3 zu sehen.

Das becherförmige Gehäuse 11 nimmt koaxial den Filtereinsatz 13 auf, der als hohlzylindrischer Formkörper aus Aktivkohle besteht. Er ist an dem Boden 11b des Gehäuses 11 über den Bodendichtring 14 aus elastischem Material dicht abgestützt. Zu diesem Zweck besitzt der Bodendichtring 14 an seiner Oberseite zwei Ringstege 14a und 14b, mit denen er die untere bzw. innere Stirnseite 13b des Filtereinsatzes 13 dicht umschließt. Außerdem ist an seiner Unterseite ein ringförmiger Dichtungssteg 14c mit einer einseitigen Anlaufschräge angeformt, der mit einer Anlaufschräge eines gegenüberstehenden Ringsteges 11d des Gehäusebodens 11b ineinander greift (siehe Fig. 4A). Aufgrund eines vorgegebenen Durchdringungsmaßes wird beim Einschieben des Filtereinsatzes der Dichtungssteg 14c verformt, wie in Fig. 4B gezeigt ist. Dadurch werden Längen- und Radialtoleranzen des Filtereinsatzes 13 ausgeglichen.

Die obere bzw. äußere Stirnseite 13a des Filtereinsatzes 13 ist über die profilierte Dichtungskappe 15 abgedichtet und an der Schraubkappe 16 abgestützt. Zu diesem Zweck besitzt die Dichtungskappe 15 an ihrer Innenseite einen Ringsteg 15a, mit dem sie die Stirnseite 13a des Filtereinsatzes 13 umfasst. Außerdem stützt sie sich mit einem an ihrer Außenseite angeformten Druckringsteg 15b an der Gehäusekappe 16 ab. Der zentrische Bereich der Dichtungskappe 15 ist an seiner Außenseite zu einem Griffsteg oder Drehknebel 15c geformt. Die Gehäusekappe 16 selbst ist unter Einfügung eines Dichtrings 22 mit dem oberen bzw. äußeren Rand 11a des Gehäuses 11 verschraubt.

Der Boden 11b des Gehäuses 11 mündet in den zentrisch angeformten Ablauf 17, von dem aus sich ein hohler, mit Längsschlitzen 23a versehener Ablaufdorn 23 in den Innenhohlraum des Filtereinsatzes 13 erstreckt. Er liegt eng an der Innenöffnung des Bodendichtrings 14 und an dessen Ringsteg 14a an und dient so auch als Führungsdorn zur Zentrierung des Filtereinsatzes 13. Im Ablauf 17 ist ferner ein Rückschlagventil 24 angeordnet, das beim Filterwechsel das Leitungssystem 2 abdichtet.

Wie aus Fig. 3 ersichtlich ist, ist zwischen dem Filtereinsatz 13 und dem Mantel 11c des Gehäuses 11 eine ringförmige Zuströmkammer 25 ausgebildet. So strömt das zu filternde Wasser bei Betrieb der Pumpe 4 über den Zulauf 21 in diese Zuströmkammer 25. Weil der Filtereinsatz 13 an beiden Stirnseiten dicht abgeschlossen ist, kann das Wasser nur radial durch die Mantelfläche des Filtereinsatzes 13 in den Innenraum des Filtereinsatzes 13 und von dort in den axialen Ablauf 17 strömen. Damit kommt die Reinigungswirkung des Aktivkohle-Formkörpers voll zur Geltung.

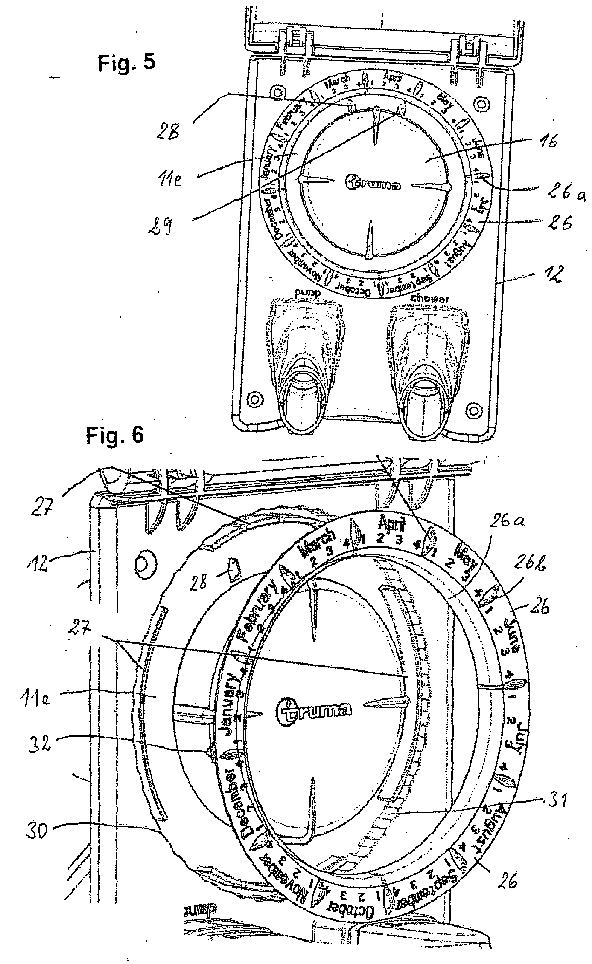

Wie in den Fig. 5 und 6 vergrößert gezeigt, ist an dem Einbaurahmen 12 eine Vorrichtung zur Erinnerung an einen fälligen Filterwechsel vorgesehen. Diese besteht aus einem Datumsring 26, der im Bereich des Einbaurahmens 12 auf einem stirnseitigen Rand 11d des Gehäuses 11 konzentrisch zu der Gehäusekappe 16 drehbar angeordnet ist. Zur drehbaren Lagerung des Datumsringes 26 ist dieser mit einem innenseitigen Ringsteg 26a an Führungsstegen 27 des Randes 11d gelagert und durch Einrasten von nicht sichtbaren Rastnasen an entsprechenden Hinterschneidungen der Führungsstege 27 gesichert. Auf der Ringoberfläche des Datumsringes 26 ist ein Jahreszyklus mit den zwölf Monaten und - vereinfacht - vier Wochen pro Monat aufgetragen. Der Skalierung des Datumsringes stehen zwei Markierungen 28 und 29 auf dem Gehäuserand 11e gegenüber, die ein vorgegebenes Kreissegment als Teil des auf dem Datumsring aufgezeichneten Zyklus begrenzen; im vorliegenden Fall ist dies die Lebensdauer eines Filtereinsatzes, die in diesem Beispiel 5 Wochen beträgt. Durch Drehen des Datumsringes mit Hilfe von Griffnasen 26b und Einstellung der aktuellen Woche auf die erste Markierung 28 kann so der Zeitpunkt der Inbetriebnahme eines neuen Filtereinsatzes markiert werden. Da das Winkelintervall zwischen beiden Markierungen der Lebensdauer des Filtereinsatzes von fünf Wochen entspricht, zeigt dann die zweite Markierung 29 auf die Woche des nächstfälligen Filterwechsels. Ein in dem Einbaurahmen 12 ausgebildeter Kragenrand 30 besitzt eine der Anzahl der möglichen Einstellschritte entsprechende Zahl von Rastnuten 31. Entsprechend sind mehrere, beispielsweise vier, Rastnasen 32 über den Umfang des Datumsringes 26 verteilt angeordnet, die bei der aktuell gewählten Einstellung in jeweils eine Nut 31 einrasten und so die Einstellung sichern.

Die Fig. 7 und 8 zeigen eine weitere Ausgestaltung der externen Steckkupplung 9 in dem Einbaurahmen 12 (siehe auch Fig. 1). Bei Nichtbenutzung dieser externen Entnahmestelle soll der Anschluss gegen den Druck des internen Leitungssystems 2 dicht sein. Zu diesem Zweck ist in dem Kupplungsgehäuse 33 eine Ventilhülse 34 mit einem nach innen gezogenen Abschlussrand vorgesehen, an welchem ein ringförmiger Dichtungssteg 34a angeformt ist. Eine Dichtungsplatte 35 ist mittels einer Druckfeder 36 leicht gegen den Dichtungssteg 34a vorgespannt; er wird im übrigen durch den Systemdruck verschlossen gehalten. Der Aufbau dieses Ventils entspricht somit einem Rückschlagventil. Wird nun ein Schlauchstecker 37 in das Kupplungsgehäuse 33 eingeführt, so kann ein an dem Stecker vorgesehener Stößel 38 die Dichtungsplatte 35 gegen die Kraft der Druckfeder 36 abheben und den Durchfluss für das Wasser in der durch die Pfeile 39 bezeichneten Strömungsrichtung ermöglichen. Bereits vorher wird der Stecker 37 beim Einführen in das Kupplungsgehäuse mit einem O-Ring 40 abgedichtet.

## Patentansprüche

1. Wasserfiltersystem für den Einsatz in autarken Versergungssystemen mit
- einem becherförmigen Gehäuse (11) mit einem zumindest an seinen Enden jeweils annähernd rotationssymmetrischen Mantel (11c), in welchen ein Zulauf (21) mündet, einem Boden (11b) mit einem zentrisch angeordneten Ablauf (17) und einer offenen, mit einer Gehäusekappe (16) dicht verschließbaren Stirnseite (11a), und mit
- einem koaxial in dem Gehäuse (11) zwischen dem Boden (11b) und der Gehäusekappe (16) angeordneten Filtereinsatz (13) und einem Bodendichtring (14)
**dadurch gekennzeichnet, dass**
der Filtereinsatz (13) durch einen hohlzylindrischen Formkörper aus Aktivkohle gebildet ist, der mit seinen Stirnenden (13a, 13b) zwischen dem Boden (11b) und der Kappe (11a) dicht eingeklemmt ist, wobei zwischen dem Mantel (11c) des Gehäuses und der Manteloberfläche des Formkörpers (13) eine ringförmige Zuströmkammer (25) gebildet ist und der Innenhohlraum des Formkörpers lediglich zum Ablauf (17) hin offen ist und im Ablauf (17) ein in den Innenhohlraum des Filtereinsatzes (13) ragender, mit einer Mehrzahl von in Längsrichtung verlaufenden Ablaufschlitzen (23a) versehener hohler Ablaufdorn (23) angeordnet ist und der Ablaufdorn (23) sich passgenau durch die Innenöffnung des Bodendichtrings (14) erstreckt.

2. Wasserfiltersystem nach Anspruch 1, **dadurch gekennzeichnet, dass** die Gehäusekappe (16) als Schraubkappe ausgebildet ist.

3. Wasserfiltersystem nach Anspruch 1 oder 2, **dadurch gekennzeichnet, dass** der Bodendichtring (14) zwischen dem Filtereinsatz (13) und dem Boden (11b) einteilig ausgeführt ist und aus elastisch deformierbarem Material mit profiliertem Querschnitt besteht.

4. Wasserfiltersystem nach Anspruch 3, **dadurch gekennzeichnet, dass** der Bodendichtring (14) auf der dem Boden (11b) zugewandten Seite einen ringförmigen Dichtungssteg (14c) mit einer umlaufenden Anlaufschräge aufweist, der mit einer entsprechenden Anlaufschräge eines an dem Boden (11b) angeformten ringförmigen Bodensteges (11d) unter Deformierung des Dichtungssteges (14c) und/oder des Bodensteges (11d) ineinander greift.

5. Wasserfiltersystem nach Anspruch 3 oder 4, **dadurch gekennzeichnet, dass** der Bodendichtring (14) an seiner Oberseite einen umlaufenden Doppelringsteg (14a, 14b) aufweist, der das bodenseitige Ende (13b) des Filtereinsatzes (13) umgreift.

6. Wasserfiltersystem nach einem der Ansprüche 2 bis 5, **dadurch gekennzeichnet, dass** zwischen dem kappenseitigen Stirnende (13a) des Filtereinsatzes (13) und der Gehäusekappe (16) eine Dichtungskappe (15) angeordnet ist, die mit einem innenseitig umlaufenden Ringsteg (15a) das obere Stirnende (13a) des Filtereinsatzes (13) umgreift und mit einem außenseitig angeformten Druckringsteg (15b) an der Gehäusekappe (16) abgestützt ist.

7. Wasserfiltersystem nach Anspruch 6, **dadurch gekennzeichnet, dass** die Dichtungskappe (15) an Ihrer Außenseite zu einem Drehknebel geformt ist.

8. Wasserfiltersystem nach einem der Ansprüche 1 bis 7, **dadurch gekennzeichnet, dass** die offene Stirnseite (11a) des Gehäuses (11) mit einem Rand (11e) umschlossen ist, auf welchem ein die Gehäusekappe (16) konzentrisch umschließender, relativ zu einer auf dem Rand (11d) angeordneten Markierung (28, 29) verdrehbarer Datumsring (26) mit einem auf seiner Ringoberfläche verzeichneten Kalenderverlauf gelagert ist.

9. Wasserfiltersystem nach Anspruch 8, **dadurch gekennzeichnet, dass** der Datumsring (26) eine Mehrzahl von vorgegebenen Rastpositionen (31) relativ zu der Markierung an dem Kragen aufweist.

10. Wasserfiltersystem nach Anspruch 9, **dadurch gekennzeichnet, dass** die Rastpositionen durch Rastnuten (31) in einem den Gehäuserand (11e) umgebenden Kragenrand (30) und durch eine oder mehrere an dem Datumsring vorgesehene Rastnasen (32) gebildet werden.

11. Wasserfiltersystem nach einem der Ansprüche 1 bis 10, **dadurch gekennzeichnet, dass** das Gehäuse (11) im Bereich seiner offenen Stirnseite (11a) mit einem Einbaurahmen (12) zum Einsetzen in die Außenwand (1a) einer mobilen Wohneinheit (1) versehen ist, derart, dass die Gehäusekappe (16) neben einem Steckanschluss (19) für eine Pumpleitung von außerhalb der Wand zugänglich ist, während der Steckanschluss (19) auf der Innenseite der Wand (1a) mit dem Zulauf (17) zum Gehäuse (11) verbunden ist.

12. Wasserfiltersystem nach Anspruch 11, **dadurch gekennzeichnet, dass** der Einbaurahmen (12) einen zusätzlichen Steckanschluss (9) für eine Schlauchleitung zu einem externen Verbraucher (7) aufweist, der mit dem Ablauf (17) des Gehäuses (11) auf der Innenseite des Einbaurahmens (12) verbunden ist und dessen Kupplungsgehäuse (33) im Ruhezustand mittels eines Druckventils (35, 36) verschlossen ist.

13. Wasserfiltersystem nach Anspruch 12, **dadurch gekennzeichnet, dass** das Druckventil eine Dichtungsplatte (35) aufweist, die mittels Federkraft (36) von der Innenseite gegen einen Dichtungssteg (34a) in dem Kupplungsgehäuse (33) andrückbar ist.

## Claims

1. Water filtration system for use in self-contained delivery systems with
- a beaker-shaped housing (11) with an outer casing (11c) which is approximately rotationally symmetrical at least at its ends and into which an inlet (21) discharges, a base (11b) with a centrally positioned outlet (17) and an open end (11a) capable of being tightly sealed with a cover flap (16), and with
- a filter cartridge (13) arranged coaxially in the housing (11) between the base (11b) and cover flap (16) and a base ring seal (14)
**characterised in that**
the filter cartridge (13) is formed by a hollow cylindrical moulded body of activated carbon, which is securely clamped between the base (11b) and cap (11a) by its ends (13a, 13b), an annular inlet chamber (25) being formed between the housing's outer casing (11c) and the outer surface of the moulded body (13¹), the moulded body's hollow interior being open only towards the outlet (17), and a hollow outlet spigot (23) being arranged in the outlet (17), said spigot projecting into the hollow interior of the filter cartridge (13), and having a plurality of longitudinally arranged drain holes (23a), the outlet spigot extending through the inner opening in the ring seal (14) and fitting very precisely.

2. Water filtration system as described in Claim 1, **characterised in that** the cover flap (16) takes the form of a screw cap.

3. Water filtration system as described in Claim 1 or 2, **characterised in that** the base ring seal (14) between the filter cartridge (13) and base (11b) is made as a single piece and consists of elastically deformable material with a shaped cross-section.

4. Water filtration system as described in Claim 3, **characterised in that** on the side facing the base (11b) the base ring seal (14) has an annular sealing rib (14c) with a circumferential contact bevel and said rib engages with a corresponding contact bevel on an annular base rib (11d) formed on the base (11b), the sealing rib (14c) and/or base rib (11d) deforming as it does so.

5. Water filtration system as described in Claim 3 or 4, **characterised in that** the base ring seal (14) has on its upper side a circumferential double annular rib (14a, 14b) which encompasses the base end (13b) of the filter cartridge (13).

6. Water filtration system as described in one of Claims 2 to 5, **characterised in that** a sealing cap (15) is provided between the cap end (13a) of the filter cartridge (13) and the cover flap (16), said sealing cap (15) enclosing the upper end (13a) of the filter cartridge (13) with an inner all-round annular rib (15a) and being braced against the cover flap (16) by an externally located annular pressure rib (15b).

7. Water filtration system as described in Claim 6, **characterised in that** the sealing cap (15) is shaped on its outer side as a turning knob.

8. Water filtration system as described in one of Claims 1 to 7, **characterised in that** the open end (11a) of the housing (11) is enclosed by a rim (11e) on which a date ring (26) is mounted which surrounds the cover flap (16) concentrically, can be rotated relative to markings (28, 29) provided on the rim (11d) and has a calendar marked on its annular surface.

9. Water filtration system as described in Claim 8, **characterised in that** the date ring (26) has a plurality of predetermined locking positions (31) relative to the markings on the collar.

10. Water filtration system as described in Claim 9, **characterised in that** the locking positions are formed by notches (31) in a collar rim (30) which surrounds the housing rim (11e) and by one or more catches (32) provided on the date ring.

11. Water filtration system as described in one of Claims 1 to 10, **characterised in that** the housing (11) is provided in the area of its open end (11a) with a mounting frame (12) for installation in the outer wall (1a) of a mobile home (1) in such a way that the cover flap (16) together with a plug-in connection (19) for a pump line is accessible from outside the wall, while the plug-in connection (19) is connected on the inner side of the wall (1a) to the inlet (17)² to the housing (11).

12. Water filtration system as described in Claim 11, **characterised in that** the mounting frame (12) has an additional plug-in connection (9) for a hose line to an external consumer (7) which is linked to the outlet (17) in the housing (11) on the inner side of the mounting frame (12) and whose coupling housing (33) is sealed in the idle state by means of a pressure valve (35, 36).

13. Water filtration system as described in Claim 12, **characterised in that** the pressure valve has an end plate (35) which can be pressed by spring force (36) from inside against a sealing rib (34a) in the coupling housing (33).

## Revendications

1. Système de filtration d'eau à utiliser dans des systèmes d'alimentation autosuffisants, comportant
- un boîtier en forme de godet (11) avec une enveloppe (11c) qui présente à peu près une symétrie de révolution au moins à ses extrémités et dans laquelle débouche une amenée (21), un fond (11b) qui présente un écoulement (17) disposé de manière centrée, et un côté frontal ouvert (11a) qui est apte à être fermé de manière étanche à l'aide d'un couvercle de boîtier (16), et
- un élément filtrant (13) qui est disposé coaxialement dans le boîtier (11), entre le fond (11b) et le couvercle (16) de celui-ci, et une bague d'étanchéité (14) pour le fond,
**caractérisé en ce que** l'élément filtrant (13) est formé par un corps profilé cylindrique creux en charbon actif qui est serré de manière étanche avec ses extrémités frontales (13a, 13b) entre le fond (11b) et le couvercle (11a), étant précisé qu'une chambre d'amenée annulaire (25) est formée entre l'enveloppe (11c) du boîtier et la surface latérale du corps profilé (13), et que l'espace intérieur creux du corps profilé n'est ouvert qu'en direction de l'écoulement (17) et qu'il est prévu dans l'écoulement (17) un cône d'écoulement creux (23) qui entre dans l'espace intérieur creux de l'élément filtrant (13) et qui est pourvu de plusieurs fentes d'écoulement (23a) s'étendant dans le sens longitudinal, et que le cône d'écoulement (23) traverse de manière parfaitement ajustée l'ouverture intérieure de la bague d'étanchéité de fond (14).

2. Système de filtration d'eau selon la revendication 1, **caractérisé en ce que** le couvercle de boîtier (16) est conçu comme un couvercle à vis.

3. Système de filtration d'eau selon la revendication 1 ou 2, **caractérisé en ce que** la bague d'étanchéité de fond (14) est réalisée d'une seule pièce entre l'élément filtrant (13) et le fond (11b) et se compose d'une matière élastiquement déformable à section transversale profilée.

4. Système de filtration d'eau selon la revendication 3, **caractérisé en ce que** la bague d'étanchéité de fond (14) présente, sur son côté tourné vers le fond (11b), une nervure d'étanchéité annulaire (14c) avec un biseau circulaire, qui vient en contact avec un biseau correspondant d'une nervure annulaire (11d) rapportée sur le fond (11b), moyennant une déformation de ladite nervure d'étanchéité (14c) et/ou de la nervure de fond (11d).

5. Système de filtration d'eau selon la revendication 3 ou 4, **caractérisé en ce que** la bague d'étanchéité de fond (14) présente sur son côté supérieur une double nervure annulaire circulaire (14a, 14b) qui entoure l'extrémité (13b) de l'élément filtrant (13) située côté fond.

6. Système de filtration d'eau selon l'une des revendications 2 à 5, **caractérisé en ce qu'**il est prévu entre l'extrémité frontale (13a) de l'élément filtrant (13) située côté couvercle et le couvercle de boîtier (16) un couvercle d'étanchéité (15) qui entoure avec une nervure annulaire circulaire intérieure (15a) l'extrémité frontale supérieure (13a) de l'élément filtrant (13) et qui est en appui, avec une nervure annulaire de pression (15b) rapportée sur le côté extérieur, sur le couvercle de boîtier (16).

7. Système de filtration d'eau selon la revendication 6, **caractérisé en ce que** le couvercle d'étanchéité (15) est conçu pour former sur son côté extérieur une poignée de rotation.

8. Système de filtration d'eau selon l'une des revendications 1 à 7, **caractérisé en ce que** le côté frontal ouvert (11a) du boîtier (11) est entouré par un bord (11e) sur lequel est montée une bague de dates (26) qui entoure de manière concentrique le couvercle (16), qui est apte à tourner par rapport à un marquage (28, 29) disposé sur le bord (11d) et sur la surface annulaire de laquelle est inscrit un calendrier.

9. système de filtration d'eau selon la revendication 8, **caractérisé en ce que** la bague de dates (26) présente par rapport au marquage prévu sur la collerette plusieurs positions d'enclenchement prédéfinies (31) .

10. Système de filtration d'eau selon la revendication 9, **caractérisé en ce que** les positions d'enclenchement sont formées par des rainures d'enclenchement (31) dans un bord de collerette (30) qui entoure le bord de boîtier (11e), et par une ou plusieurs saillies d'enclenchement (32) prévues sur la bague de dates.

11. Système de filtration d'eau selon l'une des revendications 1 à 10, **caractérisé en ce que** le boîtier (11) est pourvu, dans la zone de son côté frontal ouvert (11a), d'un cadre de montage (12) à insérer dans la paroi extérieure (1a) d'une unité d'habitation mobile (1), de telle sorte que le couvercle de boîtier (16) est accessible de l'extérieur de la paroi près d'un raccordement (19) pour une conduite de pompe, tandis que le raccordement (19) est relié à l'amenée (17) du boîtier (11) sur le côté intérieur de la paroi (1a).

12. Système de filtration d'eau selon la revendication 11, **caractérisé en ce que** le cadre de montage (12) comporte un raccordement supplémentaire (9) pour un tuyau menant à un consommateur extérieur (7), qui est relié à l'écoulement (17) du boîtier (11) sur le côté intérieur du cadre de montage (12) et dont l'enveloppe d'accouplement (33) est fermée, en position de repos, à l'aide d'une soupape de pression (35, 36).

13. Système de filtration d'eau selon la revendication 12, **caractérisé en ce que** la soupape de pression comporte une plaque d'étanchéité (35) qui est apte à être pressée à l'aide d'une force élastique (36) du côté intérieur vers une nervure d'étanchéité (34a) dans l'enveloppe d'accouplement (33).
